# Europäisches Patentamt
# European Patent Office
# Office européen des brevets

(19)

(11) Numéro de publication: **0 105 068**
**B1**

(12) **FASCICULE DE BREVET EUROPEEN**

(45) Date de publication du fascicule du brevet:
16.07.86

(51) Int. Cl.⁴: **F 16 L 47/02,** B 29 C 65/34

(21) Numéro de dépôt: 82401816.2

(22) Date de dépôt: 05.10.82

(54) Raccord électrosoudable en matière thermoplastique et procédé de fabrication.

(43) Date de publication de la demande:
11.04.84 Bulletin 84/15

(45) Mention de la délivrance du brevet:
16.07.86 Bulletin 86/29

(84) Etats contractants désignés:
BE CH DE FR GB IT LI LU

(56) Documents cités:
EP - A - 0 036 968
WO - A - 79/01018
CH - A - 450 706
DE - B - 1 048 106
DE - B - 1 071 433
FR - A - 2 345 652
FR - A - 2 477 668
GB - A - 1 342 243
NL - A - 7 906 592

(73) Titulaire: **SOCIETE D'ETUDES DE RECHERCHES ET D'APPLICATIONS DES PLASTIQUES (S.E.R.A.P.), 6, rue Cognacq-Jay, F-75007 Paris (FR)**

(72) Inventeur: **Chudet, Pierre, 11, rue de Metz, F-60200 Compiegne (FR)**
Inventeur: **Ducamp, Gérard, 20, rue de Tillolo, F-60200 Bienville (FR)**

(74) Mandataire: **Bouton Neuvy, Liliane et al, L'Air liquide, Société Anonyme pour L'Etude et L'Exploitation des Procédés Georges Claude 75, Quai d'Orsay, F-75321 Paris Cedex 07 (FR)**

## Description

La présente invention a trait à un nouveau type de raccords électrosoudables, dits RES, en matière thermoplastique; par matière thermoplastique on entend notamment les polyoléfines, telles le polyéthylène, en particulier haute densité (PEHD) et le polychlorure de vinyle (PVC); ainsi qu'à la fabrication des dits raccords.

Dans le domaine de la distribution des fluides (sous moyenne pression, tels eau et gaz, les matières plastiques tendent de plus en plus à se substituer aux matériaux métalliques traditionnels en raison de l'économie qu'elles procurent et de leurs propriétés remarquables constituées par leur inertie chimique, leur absence de corrosion et la facilité de mise en oeuvre. Les canalisations enterrées sont actuellement le domaine d'application privilégié des plastiques. Plusieurs organismes officiels de divers pays d'Europe, dont la France et la République Fédérale d'Allemagne ont adopté le polyéthylène haute densité comme matériau pour tout leur réseau de distribution de gaz de ville.

L'assemblage étanche de deux ou plusieurs canalisations ou tubes en matière thermoplastique, avec la fiabilité requise pour ce type d'exploitation, n'est obtenue que par la technique d'électrosoudage. Cette technique consiste à chauffer in-situ et très localement au moyen d'une résistance électrique les surfaces de contact des pièces assemblées, de manière à atteindre la température de soudage des deux matériaux; la résistance électrique restant insérée dans la matière.

Ce type d'assemblage se fait par l'intermédiaire d'un raccord électrosoudable constitué d'un manchon cylindrique en matière thermoplastique de forte épaisseur. Ce manchon comporte, dans son orifice intérieur calibré, un bobinage de fil métallique résistant partiellement ou complètement, noyé dans la matière thermoplastique. Les extrémités du fil sont généralement fixées à des bornes ou des cosses permettant d'assurer un bon contact électrique avec un générateur. Le raccord électrosoudable est habituellement intégré à chaque extrêmité, soit d'un raccord droit, soit d'un té, soit d'un croisillon permettant de raccorder respectivement, 2, 3 ou 4 tubes thermoplastiques ensemble.

L'extrémité du tube à raccorder est préalablement taillée en biseau pour faciliter l'emboitement du raccord électrosoudable; d'autre part, la surface externe du tube en contact avec le RES est préalablement décapée pour obtenir une meilleure soudabilité. Le dit raccord est ensuite présenté dans l'axe du tuyau et engagé sur celui-ci avec un emboitement ajusté, puis le RES est raccordé à un générateur réglé sur le programme de chauffage en relation avec le diamètre du RES; le temps de soudage est compris entre une dizaine de secondes et quelques minutes et le temps de refroidissement de l'ordre de 20 minutes.

L'avantage de ce type de raccords donne à l'installateur la possibilité de procéder à la soudure entre le raccord et le tube après que la pose et l'assemblage des tubes aient été réalisés.

Le raccord électrosoudable doit répondre à deux caractéristiques essentielles, a savoir étanchéité parfaite et résistance mécanique au moins égale à celle du tube.

On a déjà proposé deux types de raccords électrosoudables. Il existe actuellement les raccords RES avec fil résistant apparent et les RES avec fil résistant noyé dans le raccord thermoplastique.

Selon le premier type de raccord électrosoudable, les fils résistants sont nettement apparents à l'intérieur du manchon, tout en étant partiellement noyés dans la matière thermoplastique.

Dans le second type de raccord électrosoudable, les fils résistants ne sont pas apparents, mais noyés dans la matière thermoplastique.

La fabrication des raccords électrosoudables à fil résistant apparent a été étudiée depuis plus d'une vingtaine d'années. Ainsi, le brevet américain 3 062 940, sous priorité allemande du 17 février 1958, d'origine Sud West Chemie, enseigne une technique de fabrication selon laquelle on bobine le fil résistant sur un manchon en PVC par exemple, lequel est ensuite introduit dans un raccord en polyéthylène, puis on insère un noyau métallique, chauffant et extensible dans le manchon en PVC de manière à fondre le polyéthylène et à enchâsser le fil dans le raccord, le manchon de PVC encore chaud étant finalement cassé et extrait à la main.

Le brevet français 2 111 818, au nom de MANNESMAN a pour objet la réalisation d'un manchon thermoplastique obtenu par bobinage d'un film plastique extrudé sur un noyau muni du fil résistant bobiné. Le film extrudé est bobiné avec un grand étirement de manière à conférer à la matière thermoplastique des tensions élevées qui contribuent à sa rétraction lors du soudage. Ce type de manchon électrosoudable semble plus spécialement adapté pour le soudage des tubes à grand diamètre.

De nombreux procédés de fabrication ont été étudiés dans le domaine des raccords électrosoudables à fil résistant noyé. Cette caractéristique implique une technique différente de celle des RES à fils apparents, et conduit à bobiner un fil résistant sur un manchon thermoplastique, puis à surmouler le sous-ensemble ainsi constitué par injection pour obtenir le produit fini.

Dès 1955, les travaux de SUD WEST CHEMIE pour la réalisation d'un manchon cylindrique au sein duquel est noyé un enroulement de fil résistant ont fait notamment l'objet du brevet américain 3 094 452 et de DE-B-1 071 433. Selon ce procédé on plonge l'enroulement de fil soit dans un bain de résine fondue, soit en pulvérisant la résine fondue, soit en bobinant sur l'enroulement de fil résistant un film de résine thermoplastique ensuite chauffé jusqu'à fusion de la résine. Puis on peut incorporer dans un raccord par surmoulage-injection d'une résine thermoplastique. Il n'y a pas de mise sous tension ni du manchon ni du raccord.

Peu d'années après, en 1962, la Société ROLLMAPLAST a mis au point un procédé de fabrication de RES, décrit dans le brevet français 1 372 303, selon lequel un fil résistant, préalablement gainé d'une matière thermoplastique est bobiné autour d'un noyau cylindrique l'ensemble étant ensuite placé dans une presse à injecter afin d'enrober le bobinage par une matière thermoplastique et obtenir un raccord électrosoudable.

La technique résultant des travaux effectués à la SUSQUEHANNA CORPORATION et exposée dans le brevet américain 3 378 672 conduit à un type de manchon répandu dans le commerce. Ces raccords électrosoudables sont fabriqués à partir d'un fil métallique résistant émaillé et revêtu d'une gaine rectangulaire de matière thermoplastique. Le fil est bobiné à spires jointives sur un mandrin cylindrique et soudées entre elles au moyen d'une pointe chaude, puis les manchons ainsi obtenus sont logés entre deux tuyaux mâles et femelles pour assurer leur assemblage par électrosoudure.

Récemment, la démande WO-A-7 901 018, au nom de STURM, décrit un procédé de fabrication d'un manchon électrosoudable à partir d'un tube en matière thermoplastique préalablement mis en extension, puis placé sur un mandrin muni d'un bobinage de fil résistant nu ou gainé. Le fil est chauffé en même temps que le tube qui se rétreint sur le bobinage de fil résistant et noie le fil dans la matière thermoplastique du tube; le fil résistant est ainsi protégé contre les chocs accidentels lors de l'emboîtement du tube dans le raccord électrosoudable.

Ces deux types connus de raccords électrosoudables ont respectivement des avantages et des inconvénients.

Le raccord électrosoudable à fil résistant apparent présente l'avantage de mettre en contact direct le fil résistant avec le tube à souder et le raccord; lors du chauffage par effet Joule, la matière du tube et celle du raccord fondent en même temps et ceci constitue un facteur favorable pour l'obtention d'une bonne soudure.

Par contre, le principal défaut de ce type de raccord réside dans le fait que les spires apparentes du fil sont vulnérables et peuvent être déplacées lors de l'emboîtement du tube dans le raccord électrosoudable. Un tel accident conduit à rebuter le raccord car généralement, le fil résistant ne peut pas être remis en place.

Les raccords électrosoudables à fil noyé ne présentent pas cet inconvénient car le fil résistant est protégé; toutefois, ils présentent un autre inconvénient qui apparait d'autant plus lorsque le fil résistant est éloigné de la paroi du tube à souder, c'est-à-dire quand le fil résistant est noyé en profondeur dans le raccord électrosoudable.

Dans ce cas lors du chauffage par effet Joule, il est nécessaire de fondre la matière thermoplastique située entre le fil chauffant et la paroi du tube avant que cette paroi ne soit chaude et ait atteint la température adéquate pour assurer une soudure correcte entre le tube et le raccord. Comme la matière thermoplastique est peu conductrice de la chaleur, il y a des risques de surchauffe, ce qui entraîne sa dégradation thermique et nuit à sa soudabilité.

On connaît également par EP-A-036 963 un manchon électrosoudable aux deux extrémités duquel est ménagé un espace de grade d'une longueur d'au moins 1,5 fois l'épaisseur de la paroi du manchon. Ce dit manchon comporte un bobinage de fil résistant partiellement adhérent à la paroi interne du manchon; le gainage du fil résistant ayant pratiquement sa forme originelle tout au moins du côté intérieur du bobinage. Selon les moyens décrits, ce type de manchon ne peut pas permettre un électrosoudage sous haute pression.

Il à été recherché un manchon chauffant constituant le meilleur compromis entre la nécessité de protection du fil résistant contre les chocs mécaniques lors de l'emboîtement du tube à souder et la nécessité de positionner le fil résistant de manière qu'il soit pratiquement en contact avec la paroi du tube à souder.

Et il a été trouvé un nouveau type de raccord électrosoudable en matière thermoplastique qui permet la réalisation de soudures satisfaisantes avec une réussite de pratiquement 100%.

Selon l'invention, le raccord électrosoudable dans lequel est inséré un manchon cylindrique en matière thermoplastique comportant dans son orifice intérieur calibré un bobinage de fil métallique résistant, dont les extrémités sont fixées à des bornes ou des cosses assurant un bon contact avec un générateur, le fil résistant complètement enrobé dans la matière thermoplastique étant proche de la surface du raccord, affleure à l'intérieur de celui-ci, en étant recouvert d'un film thermoplastique extra-mince, caractérisé en ce que une génératrice du dit fil cylindrique résistant tangente la surface intérieure du manchon, et en ce que un espace de sécurité est ménagé à l'intérieur du dit manchon de chaque côté du bobinage du fil résistant, le dit espace étant au moins égal à 30% de la longueur du bobinage.

Dans ces conditions, le fil résistant est donc pratiquement en contact avec la paroi du tube à souder tout en étant protégé lors de l'emboîtement. Il a été découvert que l'affleurement du fil résistant à l'intérieur s'avère être une condition pratiquement nécessaire à l'obtention d'une bonne soudure.

Le raccord électrosoudable, dans lequel est inséré le manchon, est conçu de manière telle qu'une espace de sécurité soit ménagé à l'intérieur du dit manchon de chaque côté du bobinage du fil résistant, les espaces peuvent être égaux, ils ont pour objet d'éviter la fuite éventuelle de la matière thermoplastique liquide de chaque côté de l'espace occupé par le bobinage du fil résistant, lors du soudage par effet Joule.

Le fil résistant est un fil en alliage nickel-cuivre dont la résistivité est sensiblement constante quelle que soit la température. Le diamètre du fil est compris entre 0,2 et 2 mm, de préférence entre 0,30 et 1 mm; la surface du fil étant oxydée de manière à la rendre électriquement isolante et à éviter ainsi des courts-circuits électriques au cas où 2 ou plusieurs fils viendraient en contact.

Le fil résistant est recouvert par une gaine en matière thermoplastique dont l'épaisseur est comprise entre 0,1 et 1 mm, de préférence entre 0,30 et 0,50 mm.

Le fil gainé est bobiné à spires jointives, l'enroulement étant soit bifilaire de manière à obtenir que les deux extrémités du fil résistant soient du même côté du bobinage, soit monofilaire de manière à obtenir chaque extrémité du fil résistant de chaque côté du bobinage.

Le fil résistant gainé est bobiné à spires jointives sur un mandrin extensible en matière électriquement isolante et résistante à la température.

Puis, le fil résistant bobiné sur le mandrin est amené par effet Joule, à la température de ramollissement de la gaine en matière thermoplastique. A ce moment, on met le mandrin en extension jusqu'à ce qu'une génératrice du fil soit en contact avec la surface extérieure du mandrin; sans qu'il soit nécessaire de mettre le fil résistant lui-même en extension.

Après extension on laisse refroidir l'ensemble à la température ambiante, puis le manchon obtenu est enlevé du mandrin.

Ensuite, ce manchon est inséré dans un raccord électro-soudable par la technique classique du surmoulage-injection, tout en ménageant à l'intérieur du manchon, un espace de sécurité de part et d'autre du bobinage de fil résistant.

Le procédé de fabrication est illustré à titre non limitatif par les figures 1, 2 et 3 du dessin annexé et par l'exemple suivant.

La figure 1 est une vue en coupe du fil résistant bobiné sur un mandrin extensible.

La figure 2 est une vue en coupe du fil résistant bobiné sur le mandrin extensible après chauffage du fil par un courant électrique et extension du mandrin.

La figure 3 représente un raccord électrosoudable fini avec le tube à assembler introduit dans le raccord électrosoudable prêt à être soudé par effet Joule.

*Exemple:*

Le fil résistant 1 est un fil de 0,8 mm de diamètre en alliage de nickel et de cuivre dont la résistivité est pratiquement constante quelle que soit la température. Le fil est revêtu d'une gaine 2 en polyéthylène haute densité de 0,35 mm d'épaisseur. On bobine le fil gainé, à spires jointives, sur le mandrin extensible 3 muni d'une pièce conique 4 pour expansion, le diamètre du mandrin en PTFE a environ 40 mm. L'enroulement du fil résistant est bifilaire de manière à obtenir les deux extrémités du fil résistant du même côté du bobinage. La boucle non représentée formée par les fils 8 et 9 est fixée sur le mandrin 3 par la vis 5 et la rondelle 6; la vis 5 est vissée dans l'orifice taraudé 7 du mandrin 3. Les extrémités 10 et 11 du fil résistant sont maintenues sur une pièce, non représentée, autre que le mandrin 3.

Quand le bobinage est réalisé, on relie les extrémités du fil résistant à un générateur électrique réglé de manière telle que la température du fil résistant ainsi que celle de la gaine, soient portées dans la zone de ramollissement du polyéthylène haute densité, soit 200°C environ, cette température est atteinte après une dizaine de secondes de chauffage.

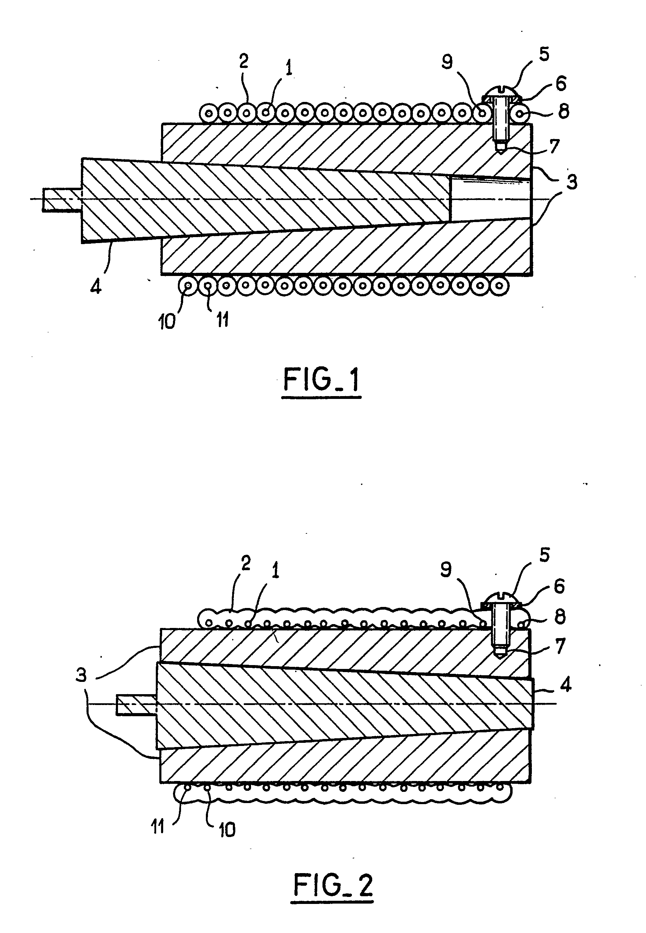

A ce moment, le mandrin 3 est mis en extension en enfonçant le noyau conique 4 dans le mandrin 3 (figure 2); l'extension du mandrin 3 est poursuivie jusqu'à ce que la surface extérieure du mandrin soit pratiquement en contact avec une génératrice du fil résistant 1 (figure 2).

Alors le noyau conique 4 est ramené à la position de la figure 1; on retire la vis 5, et le bobinage du fil résistant dont toutes les spires sont soudées ensemble, forme un manchon 1, 2 que l'on enlève du mandrin 3.

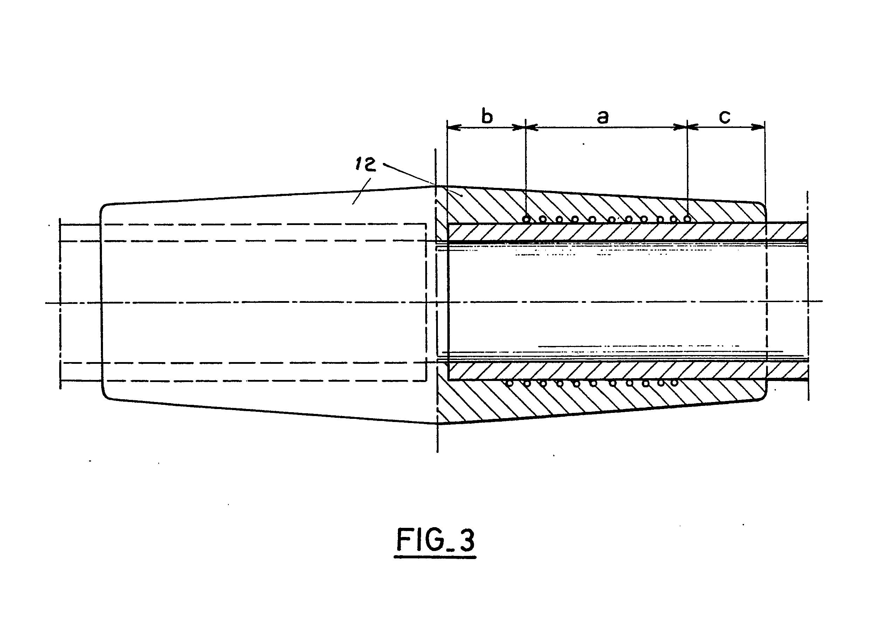

On insère ensuite ce manchon dans un raccord électrosoudable 12 par la technique classique de surmoulage-injection. Comme le montre la figure 3, le RES est réalisé de manière telle que des espaces de sécurité b et c soient ménagés de chaque côté de l'espace a où se trouve le bobinage de fil résistant.

**Revendications**

1. Raccord électrosoudable (12) dans lequel est inséré un manchon chauffant cylindrique (1, 2) en matière thermoplastique, le dit manchon comportant dans son orifice intérieur calibré un bobinage de fil métallique résistant (1), dont les extrémités sont fixées à des bornes ou des cosses assurant un bon contact avec un générateur, le fil résistant (1), complètement enrobé dans la matière thermoplastique étant proche de la surface du raccord (12), et recouvert d'un film thermoplastique extra-mince (2), caractérisé en ce qu'une génératrice du dit fil cylindrique résistant tangente la surface intérieure du manchon (1, 2) et en ce qu'un espace de sécurité (b, c) est ménagé à l'intérieur du dit manchon (1, 2) de chaque extrémité du bobinage (a) du fil résistant (1), le dit espace (b, c) étant au moins égal à 30% de la longueur du bobinage.

2. Raccord électrosoudable selon la revendication 1, caractérisé en ce que le fil résistant (1) est un alliage nickel-cuivre dont la résistivité est sensiblement constante quelle que soit la température, la surface du fil étant oxydée de manière telle qu'elle soit électriquement isolante, le diamètre du fil étant compris entre 0,2 et 2 mm, de préférence entre 0,3 et 1 mm.

3. Raccord électrosoudable selon la revendication 1 ou 2, caractérisé en ce que la gaine (2) en matière thermoplastique qui recouvre le fil résistant (1) a une épaisseur comprise entre 0,1 et 1 mm, de préférence entre 0,30 et 0,50 mm.

4. Raccord électrosoudable selon une quelconque des revendications 1 à 3, caractérisé en ce que le diamètre du fil résistant (1) est d'environ 0,8 mm et la gaine (2) en matière plastique le recouvrant a une épaisseur d'environ 0,35 mm.

5. Procédé de fabrication du manchon chauffant cylindrique inséré dans un raccord électrosoudable selon une quelconque des revendications 1 à 4, caractérisé par les stades suivantes: a) on bobine le fil résistant (1) gainé de matière thermoplastique (2) à spires jointives sur un mandrin extensible (3) en matière électriquement isolante et résistant à la température — b) on amène le fil résistant (1) bobiné sur le mandrin (3) à la température de ramollissement de la gaine (2) par effet Joule et à ce moment on met le mandrin en extension jusqu'à ce qu'une génératrice du fil soit en contact avec la surface extérieure du mandrin — c) après extension on laisse refroidir l'ensemble à la température ambiante, puis on enlève le manchon du mandrin, d) on insère ensuite ce manchon dans un raccord électrosoudable par la technique classique de surmoulage injection.

**Patentansprüche**

1. Elektrische Schweissmuffe (12), in welcher eine zylindrische Heizhülse (1, 2) aus thermoplastischem Material eingesetzt ist, die in ihrer kalibrierten inneren Öffnung eine Metallwiderstandsdrahtspule (1) aufweist, deren Enden an Klemmen oder Kabelschuhen angebracht sind, wodurch ein guter Kontakt mit einem Generator sichergestellt ist, wobei der Widerstandsdraht (1), der vollständig von dem thermoplastischen Material eingehüllt ist, nahe der Oberfläche der Muffe (12) liegt und mit einem extra dünnen thermoplastischen Film (2) bedeckt ist, dadurch gekennzeichnet, dass eine Mantellinie des zylindrischen Widerstandsdrahtes die innere Oberfläche der Hülse (1, 2) berührt und dass ein Sicherheitsraum (b, c) im Inneren der Hülse (1, 2) jedes Endes der Spule (a) des Widerstandsdrahtes (1) angeordnet ist, wobei dieser Raum (b, c) mindestens gleich 30% der Spulenlänge ist.

2. Elektrische Schweissmuffe nach Anspruch 1, dadurch gekennzeichnet, dass der Widerstandsdraht (1) eine Nickelkupferlegierung ist, deren spezifischer Widerstand im wesentlichen konstant ist, ganz gleich wie die Temperatur ist, wobei die Oberfläche des Drahtes derart oxidiert ist, dass er elektrisch isolierend ist, wobei der Durchmesser des Drahtes zwischen 0,2 und 2 mm, vorzugsweise zwischen 0,3 und 1 mm liegt.

3. Elektrische Schweissmuffe nach Anspruch 1 oder 2, dadurch gekennzeichnet, dass die Hülle (2) aus thermoplastischem Material, welche den Widerstandsdraht (1) bedeckt, eine Dicke hat zwischen 0,1 und 1 mm, vorzugsweise zwischen 0,3 und 0,5 mm.

4. Elektrische Schweissmuffe nach einem der Ansprüche 1 bis 3, dadurch gekennzeichnet, dass der Durchmesser des Widerstandsdrahtes (1) etwa 0,8 mm beträgt und dass die Hülle (2) aus plastischem Material, welche ihn bedeckt, eine Dicke von etwa 0,35 mm hat.

5. Verfahren zur Herstellung der zylindrischen Heizhülse, die in eine elektrische Schweissmuffe eingesetzt ist, nach einem der Ansprüche 1 bis 4, gekennzeichnet durch folgende Schritte:

a) man wickelt den Widerstandsdraht (1), der mit aneinanderstossenden Spiralwindungen aus thermoplastischem Material (2) ummantelt ist, auf einen streckbaren Dorn (3) aus elektrisch isolierendem und temperaturwiderstandsfähigem Material auf,

b) man bringt den auf den Dorn (3) aufgewickelten Widerstandsdraht (1) auf die Erweichungstemperatur der Hülle (2) durch Joule-Effekt, und in diesem Augenblick bringt man den Dorn in Streckung, bis eine Mantellinie des Drahtes mit der äusseren Oberfläche des Dornes in Berührung ist

c) nach dem Strecken lässt man die Gesamtheit auf die Umgebungstemperatur abkühlen und nimmt dann die Hülse vom Dorn weg, und

d) man setzt dann diese Hülse durch die bekannte Spritzgiesstechnik in die elektrische Schweissmuffe ein.

## Claims

1. Electrical welding sleeve (12), in which is inserted a cylindrical heating envelope (1, 2) of thermoplastic material, which envelope comprises a bobbin of resistant metallic wire (1) in its calibrated interior orifice, the ends of which bobbin are fixed to terminals or bushes ensuring a good contact with a generator, the resistant wire (1), completely enveloped in the thermoplastic material, is close to the surface of the sleeve (12), and covered by an extra thin thermoplastic film (2), characterized in that a generatrix of the cylindrical resistant wire is in contact with the interior surface of the envelope (1, 2) and that a security space (b, c) is located in the interior of the said envelope (1, 2) at each end of the bobbin (a) of the resistant wire (1), the said space (b, c) being at least equal to 30% of the length of the bobbin.

2. Electrical welding sleeve according to claim 1, characterized in that the resistant wire (1) is a nickel-copper alloy, the resistivity of which is essentially constant whatever the temperature is, the surface of the wire being oxidized in such a way that it is electrically insulating, the diameter of the wire being in the range between 0.1 and 2 mm, preferably between 0.3 and 1 mm.

3. Electrical welding sleeve according to claim 1 or 2, characterized in that the wrapping (2) of thermoplastic material covering the resistant wire (1) has a thickness between 0.1 and 1 mm, preferably between 0.3 and 0.5 mm.

4. Electrical welding sleeve according to one of the claims 1 to 3, characterized in that the diameter of the resistant wire (1) is about 0.8 mm and the wrapping (2) of plastic material enveloping the wire, has a thickness of about 0.35 mm.

5. Method of manufacturing the cylindrical heating envelope inserted in an electrical welding sleeve according to one of the claims 1 to 4, characterized by the following steps:

a) the resistant wire (1) coated with abutting windings of thermoplastic material (2) is wrapped upon an extensible mandrel (3) of a material electrically insulating and resisting to the temperature

b) the resistant wire (1) wrapped upon the mandrel (3) is brought to the fusing temperature of the cover (2) by Joule effect and at this moment the mandrel is brought to extension until a generatrix of the wire is in contact with the exterior surface of the mandrel

c) after extension the whole is caused to be cooled to the ambient temperature, then the envelope is replaced from the mandrel

d) this envelope then is inserted in an electrical welding sleeve by the classic technic of the injection molding.

## FIG_1

## FIG_2

FIG_3

0 105 068